# FASCICULE DE BREVET EUROPEEN

(11) **EP 3 359 500 B1**
(45) Date de publication et mention de la délivrance du brevet: **24.03.2021**
(21) Numéro de dépôt: 16788177.0
(22) Date de dépôt: 06.10.2016
(51) Int. Cl.: C03C 17/00, A61J 9/08, C03C 17/32, C03C 17/34

(54) **BIBERON EN VERRE RECOUVERT D'UN REVETEMENT DE PROTECTION CONTRE LES CHOCS THERMIQUES ET PROCEDE DE FABRICATION AFFERENT**
GLASBABYFLASCHE MIT ÜBERZUG ZUM SCHUTZ GEGEN HITZESCHOCK UND ZUGEHÖRIGES HERSTELLUNGSVERFAHREN
GLASS BABY BOTTLE COVERED WITH A COATING FOR PROTECTION AGAINST HEAT SHOCK, AND RELATED MANUFACTURE METHOD

(30) Priorité: 06.10.2015 FR 1559510
(43) Date de publication de la demande: 15.08.2018
(73) Titulaire: SGD S.A., 92800 Puteaux (FR)
(72) Inventeur: PERROT, Carine, 76260 Etalondes (FR); ZHANG, Jingwei, 91300 Massy (FR); LIU, Fan, ZhanJiang Guangdong 524000 (CN)
(74) Mandataire: Weber, Jean-François
(86) Numéro de dépôt international: PCT/FR2016/052581
(87) Numéro de publication internationale: WO 2017/060636

(56) Documents cités:
- EP-A1- 2 428 497
- WO-A1-2009/032951
- WO-A2-2008/134315
- WO-A2-2011/006089
- GB-A- 1 458 069

## Description

### DOMAINE TECHNIQUE

La présente invention se rapporte au domaine général des biberons en verre (et récipients assimilés) conçus pour contenir une substance fluide destinée à l'alimentation et à l'hydratation humaine ou animale, en particulier à l'alimentation et à l'hydratation infantile.

L'invention concerne plus précisément un biberon comprenant un récipient en verre.

L'invention concerne également un procédé de fabrication d'un biberon, dans lequel on fabrique ou on fournit un récipient en verre.

### TECHNIQUE ANTERIEURE

On utilise couramment et de manière assez répandue dans le monde des biberons fabriqués en matière plastique pour nourrir les bébés, les nourrissons et les enfants en bas âge, voire des animaux. Ces biberons, le plus souvent remplis par une substance liquide comme du lait (maternel ou infantilisé), présentent le principal intérêt d'être peu onéreux et incassables et de présenter une bonne résistance mécanique en cas de chute ou de choc, contrairement aux biberons en verre précédemment utilisés. En outre, ces biberons sont particulièrement légers, résistent aux variations de température, notamment lors de leur lavage (lave-vaisselle) et de leur désinfection (stérilisation, par exemple par immersion dans de l'eau bouillante). Ils sont par ailleurs conçus avec des dimensions, des formes et des modèles très variés, qui les rendent particulièrement pratiques et esthétiques. Il existe également des biberons dont la forme ergonomique facilite leur manipulation par le parent ou leur tenue dans les mains de l'enfant. Toutefois, alors même qu'ils offrent des atouts non négligeables, ces biberons en matière plastique n'en présentent pas moins certains inconvénients.

En effet, la plus grande majorité des biberons en plastique contiennent du bisphénol (et notamment du bisphénol A (BPA) ou du bisphénol S (BPS)), un composé chimique largement utilisé dans la fabrication des plastiques comme le polycarbonate qui entre dans la composition des biberons alimentaires et des bonbonnes d'eau. Le bisphénol, qui s'avère très utile et difficilement remplaçable, est également utilisé pour la fabrication de nombreux PVC et revêtements intérieurs des boîtes de conserve et des cannettes métalliques de sodas.

Cependant, les bisphénols (et notamment le BPA) sont notamment suspectés de jouer un rôle de perturbateur endocrinien et d'avoir à ce titre des conséquences en termes de reproduction de l'homme, en cas d'ingestion répétées chez l'enfant. Les bisphénols ont en effet tendance à être relargués spontanément dans le lait du nourrisson lors de l'utilisation du biberon, en particulier après que ce dernier a été lavé à haute température ou avec des détergents puissants et stérilisé. Une contamination par le bisphénol peut également se faire par inhalation ou par contact avec la peau.

Compte-tenu des effets négatifs avérés ou supposés des bisphénols, on a désormais de plus en plus souvent recours aux biberons en verre pour l'alimentation des bébés. Ces biberons en verre présentent une parfaite innocuité et l'intérêt de ne pas contenir de bisphénol. Le verre présente également l'avantage de ne contenir aucun phtalate et d'être recyclable à 100 %. Cependant, le verre présente l'inconvénient majeur d'être très peu résistant aux chocs thermiques, qui peuvent être générés lorsque le biberon, après avoir été stérilisé plusieurs minutes par immersion dans de l'eau bouillante par l'utilisateur, est brutalement refroidi à l'eau froide sous un robinet, ou encore lorsque l'utilisateur, après avoir rempli et fait chauffer le biberon 1 en verre, place ce dernier sous l'eau froide du robinet pour le refroidir. C'est pourquoi les biberons en verre sont classiquement fabriqués à partir d'un verre borosilicaté (par exemple de la marque déposée « *Pyrex*® »), dont le faible coefficient de dilatation thermique le rend nettement moins sensibles aux chocs thermiques qu'un verre classique, et ce même pour des épaisseurs de verre relativement importantes.

Cependant, de tels biberons en verre borosilicaté présentent notamment l'inconvénient d'être relativement complexes et coûteux à fabriquer (haute température de fusion, coût et disponibilité de la matière première, etc.), ce qui rend parfois ces biberons relativement peu accessibles financièrement, en comparaison avec les biberons en plastique connus.

Le document WO-2011/006089 A2 décrit un biberon comprenant une bouteille en verre recouverte d'un manchon en silicone sans BPA.

### EXPOSE DE L'INVENTION

Les objets assignés à l'invention visent en conséquence à porter remède aux inconvénients exposés dans ce qui précède et à proposer un nouveau biberon qui, tout en étant particulièrement peu onéreux et parfaitement sûr au plan sanitaire, présente cependant des propriétés de résistance aux chocs thermiques optimales.

Un autre objet de l'invention vise à proposer un nouveau biberon qui est facile, rapide et sûr à fabriquer.

Un autre objet de l'invention vise à proposer un nouveau biberon qui présente un excellent aspect visuel et une prise en main confortable et sûre.

Un autre objet de l'invention vise à proposer un nouveau biberon qui se prête particulièrement bien à des opérations répétées de lavage et de stérilisation, en particulier par immersion dans de l'eau bouillante.

Un autre objet de l'invention vise à proposer un nouveau biberon qui est doté de propriétés optimales de résistance aux chocs de contact, d'impact, ainsi que de rétention, en cas de casse, d'éventuels bris de verre et de substance fluide contenue dans le récipient en verre.

Un autre objet de l'invention vise à proposer un nouveau procédé de fabrication permettant d'obtenir de façon simple, peu onéreuse, rapide et sûre un biberon particulièrement sûr au plan sanitaire et résistant aux chocs thermiques.

Un autre objet de l'invention vise à proposer un nouveau procédé de fabrication permettant d'obtenir de façon simple, peu onéreuse, rapide et sûre un biberon qui, tout en présentant des propriétés de résistance aux chocs thermiques optimales, est également doté de propriétés optimales de résistance aux chocs de contact, d'impact, ainsi que de rétention, en cas de casse, d'éventuels bris de verre et de substance fluide contenue dans le récipient en verre.

Un autre objet de l'invention vise à proposer un nouveau procédé de fabrication d'un biberon comprenant un récipient en verre qui ne requiert pour sa mise en oeuvre que des moyens industriels simples et standards.

Les objets assignés à l'invention sont atteints à l'aide d'un biberon comprenant un récipient en verre, caractérisé en ce qu'il comprend également un revêtement de protection contre les chocs thermiques qui recouvre extérieurement au moins une fraction dudit récipient en verre, ledit récipient en verre étant en verre sodocalcique et ledit revêtement de protection comprenant au moins une première couche d'un matériau souple adhérant audit récipient en verre, le matériau souple étant à base de polyuréthane.

Les objets assignés à l'invention sont également atteints à l'aide d'un procédé de fabrication d'un biberon, dans lequel on fabrique ou on fournit un récipient en verre, caractérisé en ce qu'il comprend une étape de recouvrement extérieur d'au moins une fraction dudit récipient en verre par un revêtement de protection contre les chocs thermiques, ledit récipient en verre étant en verre sodocalcique et ledit revêtement de protection comprenant au moins une première couche d'un matériau souple adhérant audit récipient en verre, le matériau souple étant à base de polyuréthane.

### DESCRIPTIF SOMMAIRE DES DESSINS

D'autres objets et avantages de l'invention apparaîtront mieux à la lecture de la description qui suit, ainsi qu'à l'aide de la figure annexée, donnée à titre purement illustratif et non limitatif, et qui illustre, selon une vue schématique en coupe, un exemple de biberon conforme à l'invention, ledit biberon comprenant un récipient en verre prévu pour être fermé par un bouchon à tétine (non illustré).

### MEILLEURE MANIERE DE REALISER L'INVENTION

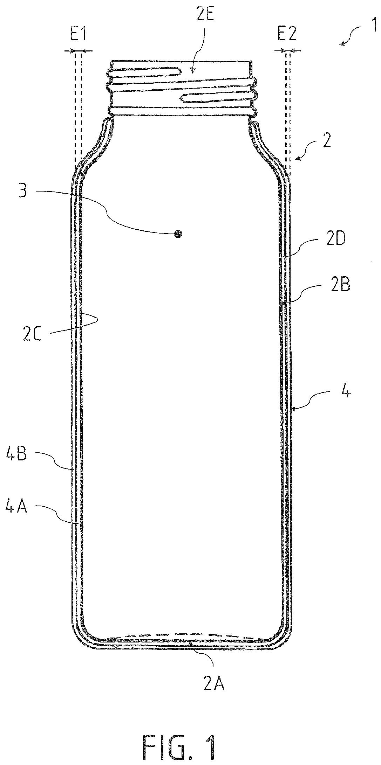

Selon un premier aspect, l'invention concerne un biberon 1 comprenant un récipient 2 en verre. De préférence, tel qu'illustré à la figure 1, ce récipient 2 en verre est formé d'un fond 2A à partir de la périphérie duquel s'élève une paroi 2B latérale délimitant une cavité 3 d'accueil pour une substance fluide, c'est-à-dire une substance susceptible de s'écouler comme par exemple une substance liquide. Formant ainsi un récipient creux, ledit récipient 2 en verre présente une face interne 2C en regard de ladite cavité 3 et une face externe 2D opposée. De manière générale, le biberon 1 est avantageusement destiné à contenir, dans sa cavité d'accueil 3, une substance liquide à usage alimentaire destinée à être administrée à un être humain, en particulier à un nourrisson, telle qu'une préparation à base de lait, de jus de fruits, de la soupe, de l'eau, ou plus généralement toute substance ou préparation sensiblement liquide pouvant être administrée à un nourrisson. Ainsi, le biberon 1 de l'invention est préférentiellement destiné à l'alimentation et l'hydratation infantile, par exemple à l'allaitement artificiel des nouveau-nés. Cependant, il peut également être adapté à un usage vétérinaire, par exemple pour l'alimentation et l'hydratation de très jeunes animaux (chatons, chiots, agneaux, veaux, etc.).

La paroi 2B latérale du récipient 2 en verre s'étend avantageusement jusqu'à une zone de diamètre restreint formant un goulot 2E ou une bague 2E, lequel (laquelle) ferme le biberon tout en ménageant une ouverture de remplissage / distribution permettant de mettre en communication la cavité 3 avec l'extérieur, et conçue pour recevoir et retenir (par exemple par vissage) un bouchon équipé d'une tétine (non représentés), lesdits bouchon et tétine étant destinés à permettre d'administrer ladite substance sensiblement liquide au nourrisson et de maintenir le biberon 1 fermé. Le biberon 1 peut également comprendre en tant que tel, outre ledit récipient 2 en verre, lesdits bouchon et tétine, ainsi que d'éventuels accessoires ou pièces rapportées (moyen de préhension de type poignée, socle stabilisateur, etc.).

Selon l'invention, ledit récipient 2 en verre est en verre sodocalcique (ou « *silicocalcosodique* », de type III), tel que couramment utilisé pour la fabrication de bouteilles, pots ou flacons destinés à contenir des produits alimentaires. Le récipient 2 du biberon 1 n'est donc pas réalisé, comme cela est classiquement le cas, en verre borosilicaté (Type I). A la différence, d'un récipient qui serait réalisé en verre borosilicaté, le récipient 2 en verre sodocalcique du biberon 1 de l'invention est intrinsèquement particulièrement sensible aux chocs thermiques, c'est-à-dire aux brusques variations de température, le coefficient de dilatation thermique linéaire du verre sodocalcique étant généralement supérieur à 90.10⁻⁷/K, tandis que celui du verre de type I est d'environ 30.10⁻⁷/K à 50.10⁻⁷/K. Le verre pour le biberon 1 de l'invention étant de préférence transparent et incolore dans sa masse, le récipient 2 en verre peut cependant ou alternativement avantageusement être décoré ou porter des indications utiles pour son utilisation, par exemple une graduation pour indiquer la contenance du biberon 1 ou un marqueur thermochromique pour refléter la température du biberon 1 et de son contenu. Toute sorte de décors ou autre classiquement présents, à titre esthétique et/ou informatif, sur le biberon 1, en particulier sur sa face externe 2D, peut avantageusement être ajoutée audit récipient 2 en verre, notamment au niveau de sa paroi 2B latérale en verre.

Le biberon 1 de l'invention comprend un revêtement 4 de protection contre les chocs thermiques qui recouvre extérieurement au moins une fraction dudit récipient 2 en verre. Selon un mode de réalisation préférentiel, ledit revêtement 4 de protection recouvre extérieurement l'intégralité dudit récipient 2 en verre et donc dudit fond 2A et de ladite paroi 2B latérale (ainsi qu'optionnellement du goulot 2E) de ce dernier. La face externe 2D du récipient 2 en verre du biberon 1 est ainsi avantageusement au moins partiellement et de préférence totalement entourée d'un revêtement 4 protecteur formant une enveloppe de protection contre les chocs thermiques. Dans l'exemple avantageux illustré à la figure 1, le revêtement 4 recouvre ainsi sensiblement continûment et uniformément la face externe 2D du récipient 2 en verre, tant au niveau du fond 2A que de la paroi latérale 2B et éventuellement du goulot 2E, de sorte que le biberon 1 illustré à la figure 1 est en l'espèce entièrement revêtu sur sa face externe 2D, laquelle n'est donc sensiblement plus accessible de l'extérieur. Le revêtement 4 est préférentiellement retenu de manière fixe et stable sur la face externe 2D, sensiblement en tout point de cette dernière, de telle sorte qu'on ne puisse pas le détacher facilement de cette dernière. En effet, de manière avantageuse, le revêtement 4 adhère au récipient 2 en verre, sans espace entre la face externe 2D de ce dernier et ledit revêtement 4, de telle sorte qu'aucune saleté ou aucun micro-organisme ne puisse s'introduire et éventuellement se développer entre la face externe 2D de ce dernier et ledit revêtement 4. Une telle application du revêtement 4 contre la face externe 2D du récipient 2 en verre garantit ainsi la fiabilité du revêtement dans le temps, son innocuité et sa sécurité sanitaire.

Ainsi, le revêtement 4 vise, selon l'invention, à assurer une protection du récipient 2 en verre du biberon 1 contre les chocs thermiques, et donc contre un risque de casse liée à une dilation thermique trop importante et trop rapide du récipient 2 en verre due à une élévation ou à une baisse brutale, qu'elle soit locale ou généralisée, de la température moyenne dudit récipient 2 en verre. De tels chocs thermiques peuvent, par exemple, être générés lorsque le biberon 1, après avoir été stérilisé plusieurs minutes par immersion dans de l'eau bouillante par l'utilisateur, est brutalement refroidi à l'eau froide sous un robinet, ou encore lorsque l'utilisateur, après avoir rempli et fait chauffer (par exemple au four à micro-ondes) le biberon 1 en verre, place ce dernier sous l'eau froide du robinet pour le refroidir. Jouant ainsi avantageusement un rôle d'isolant thermique, d'absorbeur de chocs thermiques, ledit revêtement 4 peut également réciproquement permettre d'isoler l'extérieur du biberon 1 d'une substance fluide chaude contenue dans ce dernier, évitant notamment ainsi le refroidissement trop rapide de ladite substance. Il est à noter que le revêtement 4 de protection peut avantageusement également viser à assurer d'autres fonctions, de manière tout à fait complémentaire et intéressante, et en particulier les fonctions suivantes :
- une fonction de protection contre les chocs de contact, d'impact, du biberon contre un objet ou une surface dure, afin d'augmenter la résistance aux chocs par contact (chute, heurts, etc.) du biberon 1, le revêtement 4 jouant à cet effet le rôle d'une enveloppe protectrice amortissante « *anti-casse* », et / ou
- une fonction de rétention en cas de casse du récipient 2 en verre, par exemple à la suite d'une chute du biberon 1, cette fonction visant à ce que le revêtement 4 forme une enveloppe qui retient en son sein à la fois les bris de verre et la substance fluide qui était contenue dans le récipient 2 en verre du biberon 1.

De préférence, le revêtement 4 assure également une fonction de renforcement du récipient 2 en verre, notamment en comblant les microfissures et atténuant les défauts potentiellement présents à la surface de ce dernier. En effet, si le récipient 2 du biberon 1 présente localement un défaut de surface, le choc thermique tend à provoquer une forte contrainte autour de ce défaut, conduisant potentiellement à la fissuration voire à la casse. De manière avantageuse, ledit revêtement 4 est sensiblement transparent, c'est-à-dire qu'il laisse passer la lumière et que l'on distingue le contenu du biberon 1 à travers le revêtement 4. De préférence, le revêtement 4 n'a pas de teinte particulière et est sensiblement incolore. Toutefois, il est parfaitement envisageable, sans sortir du cadre de la présente invention, que le revêtement 4 présente une couleur particulière tout en conservant ses propriétés de transparence. Il est par ailleurs également envisageable que le revêtement soit translucide avec ou non une coloration associée, de manière à permettre de seulement distinguer le niveau du contenu du biberon 1.

Selon l'invention, ledit revêtement 4 de protection comprend au moins une première couche 4A d'un matériau souple adhérant audit récipient 2 en verre. Dans le mode de réalisation préférentiel illustré par la figure 1, cette première couche 4A recouvre directement, et de préférence sensiblement intégralement, le récipient 2 en verre, c'est-à-dire qu'elle vient au contact direct de la face externe 2D du récipient2 en verre, sans que ne soit interposée entre la première couche 4A et ladite face externe 2D une quelconque couche intermédiaire. Dans ce cas, la première couche 4A adhère donc, de préférence par elle-même et directement (sans couche de colle ni couche primaire intermédiaire) audit récipient 2 en verre.

La première couche 4A est formée d'un matériau à base de polyuréthane, souple, adhérant au récipient 2 en verre et, en particulier à sa face externe 2D, de préférence directement comme exposé ci-avant. Le matériau souple en question est avantageusement majoritairement formé d'un polyuréthane (c'est-à-dire d'un polymère d'uréthane), et de préférence sensiblement intégralement constitué d'un polyuréthane choisi pour ses qualités d'adhérence au verre, son caractère souple (qui permet avantageusement une bonne tenue intrinsèque aux variations importantes et brutales de température, ainsi qu'un bon effet d'amortissement et une protection contre les chocs et impacts), ainsi qu'avantageusement sa résistance mécanique qui permet d'assurer en outre la rétention à la fois des éventuels bris de glace résultant de la casse du récipient 2 en verre et de la substance fluide contenue dans ce dernier.

De préférence, le matériau souple formant ladite première couche 4A est obtenu par désolvatation (par exemple par séchage) d'une première composition consistant en une dispersion d'une substance à base de polyuréthane dans un solvant. Le terme « solvant » est ici entendu de manière relativement extensive, au sens où ladite substance à base de polyuréthane n'est pas nécessairement dissoute, dissociée par ledit solvant. Le solvant en question, préférentiellement majoritaire au sein de ladite première préparation, forme cependant avantageusement un vecteur, de préférence liquide, pour ladite substance à base de polyuréthane. Avantageusement, ledit solvant est de l'eau et ladite première composition consiste en une dispersion en phase aqueuse d'une substance à base de polyuréthane. De manière encore plus préférentielle, ladite première composition consiste en une dispersion en phase aqueuse d'un matériau polymérisé (polyuréthane) non réactif (c'est-à-dire déjà entièrement polymérisé) dont la masse molaire est suffisamment élevée (par exemple au moins égale à 200 000 g.mol⁻¹, et de façon encore plus préférentielle au moins égale à 300 000 g.mol⁻¹) pour que la simple évaporation de la phase aqueuse résultant de ladite désolvatation entraîne la formation d'un film formant ladite première couche 4A. En d'autres termes, la première couche 4A est obtenue de préférence exclusivement par désolvatation de la première composition une fois cette dernière déposée sous forme de film à la surface du récipient 2 en verre, avantageusement sans qu'aucune réaction, et en particulier de polymérisation ou de réticulation, n'intervienne après dépôt de ladite première composition à la surface du récipient 2 en verre. Avantageusement, la seule évaporation de la phase aqueuse au sein de laquelle est dispersé le matériau polymérisé suffit pour former un film cohésif qui adhère directement sur la face externe 2D du récipient 2 en verre et forme ainsi la première couche 4A. La première composition ne contient alors pas de produits réactifs, du type uréthane, isocyanate ou alcool, mais inclut directement le polymère déjà complètement polymérisé et dispersé en phase aqueuse. De préférence, ladite dispersion formant la première composition est une émulsion aqueuse du matériau polymérisé, c'est-à-dire que des particules dudit polymère à base de polyuréthane sont dispersées dans de l'eau, ce qui permet notamment de faciliter le processus d'application, notamment au moyen d'outils de pulvérisation, comme on le verra plus loin. L'invention n'est cependant pas limitée à la mise en œuvre d'une émulsion aqueuse, et il est par exemple tout à fait envisageable que le matériau polymérisé se présente sous la forme d'une suspension de particules solides de polymère dans de l'eau, voire même d'une solution dudit polymère dans de l'eau. La mise en œuvre d'un polyuréthane déjà polymérisé, en phase aqueuse, permet donc de faciliter l'application et l'obtention de la première couche 4A et de réduire les risques des opérateurs, s'agissant d'une phase aqueuse.

L'épaisseur E1 de la première couche 4A est, de préférence, sensiblement comprise entre 30 et 300 µm, et de préférence encore d'au moins 50 µm. Dans un mode de réalisation particulièrement avantageux, l'épaisseur E1 de la première couche 4A est sensiblement comprise entre 50 et 200 µm, de préférence encore sensiblement égale à 100 µm. Les plages d'épaisseur précitées, qui peuvent bien sûr être adaptées en fonction d'une part des caractéristiques du biberon 1 à revêtir (et en particulier l'épaisseur de ce dernier, le risque de casse en cas de choc thermique allant notamment croissant avec l'épaisseur du verre) et des caractéristiques du matériau formant ladite première couche 4A, permettent d'obtenir une protection optimale contre les chocs thermiques tout en conservant un coût de fabrication du biberon 1 raisonnable. En outre, elles garantissent également avantageusement, selon le choix du matériau formant ladite première couche 4A, une tenue mécanique suffisante de la première couche 4A pour assurer la rétention éventuelle de bris de verre et/ou de substances fluides.

De préférence, le revêtement 4 de protection est un revêtement multicouche qui comprend ladite première couche 4A recouvrant ledit récipient 2 en verre et au moins une deuxième couche 4B, superposée, qui recouvre ladite première couche 4A. Ladite première couche 4A est formée dudit matériau souple adhérant audit récipient 2 en verre, tandis que ladite deuxième couche 4B est quant à elle formée d'un matériau avantageusement plus dur et est notamment destinée à venir protéger ladite première couche 4A. Par exemple, la deuxième couche 4B est destinée à conférer au revêtement 4 une résistance au lavage (e.g. dégradation par abrasion lors d'un nettoyage du biberon 1 à l'éponge, dégradation par exposition à des produits d'entretien de type liquide vaisselle, produit pour lave-vaisselle, etc.), à la stérilisation, et/ou une résistance au souillage par des substances alimentaire, et / ou encore une résistance aux rayonnements UV, ou encore une aptitude à être décorée, par exemple par impression, *etc.* Ladite deuxième couche 4B est ainsi superposée sur et contre ladite première couche 4A de telle sorte que cette dernière est interposée entre la face externe 2D du récipient 2 en verre d'une part et la deuxième couche 4B d'autre part. Selon le mode de réalisation préférentiel illustré à la figure 1, ledit revêtement 4 est un revêtement bicouche, la première couche 4A adhérant directement audit récipient 2 en verre, tandis que la deuxième couche 4B forme la couche superficielle dudit revêtement 4. Il est cependant parfaitement envisageable que le revêtement 4 comprenne plus de deux couches, et par exemple trois ou quatre couches, ou plus.

Ladite première couche 4A étant formée, comme envisagé plus haut, d'un matériau souple à base de polyuréthane, cette deuxième couche 4B est formée de préférence d'un matériau à base de polyuréthane fonctionnalisé par un composé à base d'un fluoropolymère, ledit fluoropolymère étant de préférence le polytétrafluoroéthylène (PTFE). Un tel matériau permet avantageusement audit revêtement 4 d'être suffisamment hydrophobe superficiellement afin de permettre le lavage et la stérilisation, et en particulier la stérilisation par immersion dans de l'eau bouillante, du biberon 1. La deuxième couche 4B assure ainsi différentes fonctions, comme évoqué plus haut, et vise notamment à protéger la première couche 4A, à préserver l'adhésion de cette dernière au récipient 2 en verre (en empêchant en particulier la réaction de l'eau avec la première couche 4A, ce qui permet d'éviter notamment un « *gonflement* » de la première couche 4A sous l'effet de l'eau qui pourrait conduire à une perte de cohésion avec le récipient 2 en verre) et à permettre au biberon 1 ainsi revêtu de pouvoir être lavé et stérilisé.

Un additif de réticulation de type silane pourrait être ajouté à la première composition, pour réticuler le matériau polymérisé après dépôt sur le récipient 2 en verre. Cela permettrait d'améliorer l'adhérence, la résistance chimique et la résistance hydrolytique du revêtement 4. En revanche, une telle réticulation aurait également tendance à rendre la première couche 4A cassante, ce qui dégraderait par conséquent fortement ses propriétés de protection thermique, ainsi que ses éventuellement propriétés additionnelles de rétention. Il est donc préférable de se passer d'une polymérisation ou réticulation post-dépôt, et de compenser les effets défavorables de cette absence de polymérisation ou réticulation par la mise en œuvre de la deuxième couche 4B qui protégera la première couche 4A, laquelle est notamment susceptible d'être vulnérable au lavage et la stérilisation, en particulier lorsque celles-ci sont répétées un grand nombre de fois au cours de la vie du biberon 1.

Grâce au fait que le matériau formant la deuxième couche 4B est à base de polyuréthane, celle-ci peut adhérer efficacement et naturellement à la première couche 4A qui est préférentiellement également à base de polyuréthane. En plus de cette compatibilité entre les première 4A et deuxième 4B couches, avantageusement obtenue par la présence commune de polyuréthane dans les deux couches 4A, 4B en question, la composition de la deuxième couche 4B favorise un comportement optimal du biberon 1 au lavage et à la stérilisation, et en particulier la stérilisation par immersion dans l'eau bouillante. En effet, la fonctionnalisation par un fluoropolymère, et en particulier par un fluoropolymère qui est le polytétrafluoroéthylène (PTFE), permet de conférer au revêtement 4 un caractère hydrophobe en surface, une résistance au blocage élevée ainsi qu'un caractère particulièrement lisse. Ces différentes propriétés permettent au revêtement 4 de supporter les contraintes inhérentes aux opérations de lavage et de stérilisation. La résistance au blocage permet en particulier, lorsque plusieurs biberons disposés côte à côte et au contact les uns des autres sont lavés et/ou stérilisés en même temps (par exemple en crèches, nurseries, cliniques, etc.), d'éviter une adhésion intempestive des biberons les uns aux autres sous l'effet des contraintes physico-chimiques induites par le lavage et / ou la stérilisation. En outre, un tel revêtement 4 s'avère particulièrement résistant au souillage, notamment par des substances alimentaires.

De préférence, ledit matériau formant la deuxième couche 4B comprend le produit réactionnel d'un isocyanate avec au moins une substance à base d'un fluoropolymère. Plus précisément, la deuxième couche 4B est avantageusement obtenue par polymérisation d'une deuxième composition, préférentiellement en phase aqueuse, incluant au moins ledit isocyanate et ladite substance à base d'un fluoropolymère, d'autres composants pouvant bien entendu être présents par ailleurs (tel qu'un alcool pour réagir avec l'isocyanate et former du polyuréthane). La deuxième composition est donc déposée sur la première couche 4A, puis ses composants co-réagissent pour former un polymère à base de polyuréthane fonctionnalisé par un fluoropolymère, qui est de préférence le polytétrafluoroéthylène (PTFE). L'emploi de PTFE permet notamment d'obtenir une excellente résistance au souillage et au blocage de la deuxième couche 4B, tandis que le recours à un isocyanate précurseur du polyuréthane permet d'assurer la compatibilité et donc l'adhésion de la couche de surface formée en l'occurrence par la deuxième couche 4B avec la sous-couche (première couche 4A) à base de polyuréthane. La deuxième composition constitue ainsi avantageusement un vernis de protection, préférentiellement en phase aqueuse, qui une fois appliqué sur la première couche 4A réagit pour former un polymère à base de polyuréthane fonctionnalisé par un fluoropolymère, permettant d'obtenir en surface du revêtement 4 une couche lisse homogène et continue, qui autorise le lavage et la stérilisation du biberon 1 sans dégradation significative ou permanente du revêtement 4. Avantageusement, ledit isocyanate est un isocyanate bloqué, de préférence au moyen d'un agent de blocage adapté (par exemple un agent de blocage permettant à l'isocyanate bloqué d'être soluble dans l'eau). Ceci permet notamment de pouvoir aisément conserver la deuxième composition et de la stocker au cours du temps, tout en permettant à l'isocyanate en question de rester réactif et de polymériser lorsque les conditions requises sont réunies (par exemple lorsque la température est suffisante). De préférence, la deuxième composition est exempte de tout isocyanate libre et comprend uniquement un (ou plusieurs) isocyanate bloqué.

Avantageusement, l'épaisseur de la deuxième couche 4B est inférieure à celle de la première couche 4A. La première couche 4A est en effet essentiellement destinée à amortir les chocs thermiques et à assurer, optionnellement, une fonction de rétention d'éventuels bris de verre et de fluide, ces différentes fonctions nécessitant une épaisseur suffisamment importante de la première couche 4A. À l'inverse, la deuxième couche 4B assure avant tout une protection de la première couche 4B et peut donc de ce fait présenter une épaisseur moindre. Avantageusement, l'épaisseur E2 de la deuxième couche 4B est ainsi sensiblement comprise entre 5 et 50 µm, et de façon encore plus préférentielle sensiblement comprise entre 10 et 30 µm, de préférence sensiblement égale à 20 µm.

Dans ce qui précède, il a été décrit un revêtement 4 présentant préférentiellement un aspect visuel homogène. Il est cependant parfaitement envisageable d'introduire par exemple des pigments dans la première couche 4A et/ou dans la deuxième couche 4B, afin d'obtenir un revêtement 4 coloré plus ou moins translucide, ou une protection vis-à-vis des UV. Différents effets et textures peuvent également être recherchés et obtenus, au moyen par exemple de l'inclusion de particules (par exemple pour améliorer la tenue en main du biberon 1) ou paillettes. Le revêtement 4 conforme à l'invention se prête également à l'application sur sa deuxième couche 4B supérieure d'un décor, par exemple par sérigraphie ou toute autre technique connue.

L'invention permet ainsi, en particulier dans son mode de réalisation avantageux décrit dans ce qui précède et illustré par la figure 1, d'obtenir un biberon 1 particulièrement peu coûteux, puisque réalisé en verre sodocalcique classique, mais pour autant d'utilisation particulièrement sûre du fait de sa résistance aux chocs, et en particulier aux chocs thermiques, ses propriétés de résistance n'étant pas sensiblement dégradées dans le temps, même après un grand nombre de cycles d'utilisation, de lavage et de stérilisation.

Selon un autre aspect, l'invention concerne un procédé de fabrication d'un biberon 1, dans lequel on fabrique ou on fournit un récipient 2 en verre, lequel est préférentiellement formé d'un fond 2A à partir de la périphérie duquel s'élève une paroi 2B latérale en verre délimitant une cavité 3 d'accueil pour une substance fluide. Formant ainsi un récipient creux, ledit récipient 2 en verre présente une face interne 2C en regard de ladite cavité 3 et une face externe 2D opposée. Un tel récipient 2 en verre peut être fabriqué selon tout procédé verrier classique (verre soufflé, verre pressé, verre moulé, verre étiré, procédé Vello ou procédé Danner, etc.).

Le procédé en question est avantageusement un procédé de fabrication d'un biberon 1 conforme à l'invention, de sorte que la description exposée dans ce qui précède en relation avec le biberon 1 selon l'invention reste valable et applicable, *mutatis mutandis,* au présent procédé. En particulier, conformément à ce qui précède, ledit récipient 2 en verre est en verre sodocalcique (type III),

Selon l'invention, le procédé comprend une étape de recouvrement extérieur d'au moins une fraction de dudit récipient 2 en verre par un revêtement 4 de protection contre les chocs thermiques. Comme exposé précédemment, ledit revêtement 4 de protection contre les chocs thermiques comprend au moins une première couche 4A d'un matériau souple adhérant audit récipient 2 en verre. Selon un mode de réalisation préférentiel, ledit revêtement 4 de protection recouvre extérieurement l'intégralité dudit récipient 2 en verre et donc dudit fond 2A et de ladite paroi 2B latérale (ainsi qu'optionnellement du goulot 2E) de ce dernier. A l'issue du procédé de l'invention, la face externe 2D du récipient 2 en verre du biberon 1 est ainsi avantageusement au moins partiellement et de préférence totalement entourée dudit revêtement 4 formant une enveloppe de protection contre les chocs thermiques. Le biberon 1 fabriqué selon le procédé de l'invention comprend préférentiellement un revêtement 4 qui recouvre ainsi sensiblement continûment et uniformément la face externe 2D du récipient en verre, tant au niveau du fond 2A que de paroi 2B latérale (ainsi qu'optionnellement du goulot 2E), de sorte que ledit biberon 1 est en l'espèce entièrement revêtu sur sa face externe 2D, laquelle n'est donc sensiblement plus accessible de l'extérieur.

Le procédé selon l'invention comprend une étape de formation de ladite première couche 4A visant à déposer sur la surface (de préférence externe) dudit récipient 2 en verre un premier film d'un matériau souple destiné à former ladite première couche 4A. De préférence, ledit premier film recouvre directement le récipient 2 en verre, c'est-à-dire qu'il vient avantageusement en contact direct avec ce dernier, sans que ne soit interposée de couche intermédiaire entre le premier film ainsi déposé et le récipient 2 en verre. Dans ce cas, le premier film adhère donc directement et par lui-même (sans couche de colle ni couche primaire intermédiaire) audit récipient 2 en verre à revêtir. De préférence, ladite première couche 4A, obtenue à partir dudit premier film, est formée d'un matériau à base de polyuréthane, souple, adhérant au récipient 2 en verre et, en particulier à sa face externe 2D, de préférence directement comme exposé ci-avant. Le matériau souple en question est avantageusement majoritairement formé d'un polyuréthane et est avantageusement conforme à la description qui en a été faite précédemment en relation avec le biberon 1 de l'invention.

Ladite étape de formation de ladite première couche 4A inclut, de préférence, au moins une première opération de pulvérisation électrostatique, sur ledit récipient 2 en verre, d'une première composition formée par une dispersion d'une substance à base de polyuréthane dans un solvant, pour obtenir ledit premier film (à base donc de polyuréthane) destiné à former ladite première couche 4A. Comme exposé précédemment, ledit premier film est destiné à former la première couche 4A, c'est-à-dire que le premier film devient ladite première couche 4A une fois toutes les étapes du procédé selon l'invention effectuées (incluant non seulement ladite première opération de pulvérisation électrostatique susvisée, mais également d'éventuelles étapes ultérieures de désolvatation, séchage, cuisson, etc.). Le procédé de l'invention conduit donc, de préférence, à déposer sur le récipient 2 en verre un premier film à base de polyuréthane, c'est-à-dire essentiellement formé de polyuréthane, qui formera ladite première couche 4A du revêtement 4 de protection, laquelle première couche 4A confère audit revêtement 4 l'essentiel de sa propriété de protection contre les chocs thermiques.

De façon préférentielle, la première composition est déposée à la surface du récipient 2 en verre de manière à ce que ledit première film appliqué soit suffisamment épais pour que ladite première couche 4A (qui présente un caractère sec) obtenue présente une épaisseur E1 d'au moins 50 µm. Les travaux qui ont conduit à l'invention ont en effet permis d'établir qu'une telle épaisseur minimale permettait à ladite première couche 4A d'assurer de façon optimale une fonction de protection contre les chocs thermiques, mais également, de manière particulièrement avantageuse, une fonction de rétention à la fois des bris de verre et de la substance fluide éventuellement contenue dans le récipient 2 en verre du biberon 1, ainsi qu'une excellente résistance de ce dernier aux chocs par contact (chute, heurts, etc.). De préférence, l'épaisseur E1 de ladite première couche 4A est sensiblement inférieure ou égale à 300 µm, de préférence sensiblement inférieure ou égale à 200 µm. Ainsi, l'épaisseur de ladite première couche 4A est avantageusement comprise entre 50 et 200 µm, selon notamment l'épaisseur du récipient 2 en verre à protéger, ainsi que de la nature exacte de la première composition à base de polyuréthane.

La technique de projection électrostatique préférentiellement mise en oeuvre dans le cadre de l'invention repose pour l'essentiel sur :
- le placement de la première composition à un potentiel avec une première polarité, et sur le placement du récipient 2 en verre à revêtir à un potentiel avec une autre polarité (par exemple par mise en contact du récipient 2 en verre avec une électrode),
- sur la fragmentation (en l'espèce mécanique) de la première composition (atomisation) pour obtenir un nuage de particules fluides (gouttelettes) à projeter, lesdites particules fluides ainsi projetées étant attirées par la surface du récipient 2 en verre à revêtir sous l'effet du champ électrique résultant de la différence de polarité susvisée, qui permet en outre auxdites particules fluides de se répartir de façon homogène sur la surface dudit récipient 2 en verre, et en particulier la face externe 2D de ce dernier.

Le recours à une technique de pulvérisation électrostatique pour déposer ledit premier film destiné à former ladite première couche 4A s'avère être remarquablement avantageux pour l'obtention, sur un récipient 2 en verre, d'une première couche 4A aussi épaisse à base de polyuréthane. En effet, la technologie électrostatique permet un taux de transfert élevé, par exemple de l'ordre de 50 à 60 %. Or, pour l'application d'un premier film destiné à former une première couche 4A dont l'épaisseur est importante, comme c'est le cas ici (épaisseur préférentiellement supérieure ou égale à 50 µm), le rendement de dépôt influe directement et significativement sur le coût de production. L'invention permet ainsi, par la mise en oeuvre d'une pulvérisation électrostatique pour déposer le premier film, de maîtriser le coût de fabrication du revêtement 4 sans que cela n'affecte les propriétés de protection (notamment) thermique recherchées. La technologie de pulvérisation électrostatique permet en outre un temps de réglage extrêmement réduit, en particulier par rapport à un système pneumatique classique qui met généralement en œuvre, notamment lorsqu'il s'agit de recouvrir un récipient du genre flacon, plusieurs pistolets (en général trois) à régler individuellement. L'invention a par ailleurs également permis d'établir qu'il était possible d'appliquer, au moyen de la technologie de pulvérisation électrostatique, une substance à forte viscosité (ce qui est le cas de la première composition à base de polyuréthane) sans générer de micro-bullage, la technique de pulvérisation électrostatique permettant en l'espèce l'obtention d'un premier film particulièrement homogène, y compris lorsque le récipient 2 en verre à recouvrir est de forme complexe (tel que dans le cas de la fabrication d'un biberon 1). Par exemple, dans un mode de réalisation avantageux du procédé selon l'invention, qui permet d'obtenir d'une première couche 4A particulièrement résistante, souple et cohésive, la première composition présente une viscosité à 20 °C qui est comprise entre sensiblement 800 et 2 000 mPa.s, de façon encore plus préférentielle entre sensiblement 1 000 et 1 800 mPa.s, ce qui permet d'appliquer aisément la première composition sur le récipient 2 en verre en un premier film mince, homogène et uniforme, notamment au moyen d'instruments de pulvérisation. À cette fin, il est particulièrement avantageux que la première composition présente une viscosité à 20 °C qui soit comprise entre sensiblement 1 300 et 1 400 mPa.s sans que cela n'empêche l'obtention d'une première couche 4A régulière et homogène.

Comme évoqué précédemment, le solvant dans lequel est dispersée ladite substance à base de polyuréthane formant la première composition est préférentiellement de l'eau, de sorte que ladite première composition est formée dans ce cas par une dispersion en phase aqueuse de ladite substance à base de polyuréthane. Le recours à un tel solvant aqueux est ici particulièrement intéressant puisqu'il permet d'optimiser l'efficacité de la pulvérisation électrostatique, tout en étant respectueux de l'environnement et de la santé des opérateurs de production. Pour les raisons explicitées plus haut en lien avec la description du biberon 1 de l'invention, ladite première composition consiste, de manière encore plus préférentielle, en une dispersion en phase aqueuse d'un matériau polymérisé (à base de, ou constitué entièrement de, polyuréthane) non réactif (c'est-à-dire déjà entièrement polymérisé) dont la masse molaire est suffisamment élevée (par exemple au moins égale à 200 000 g.mol⁻¹, et de façon encore plus préférentielle au moins égale à 300 000 g.mol⁻¹) pour que la simple évaporation de la phase aqueuse résultant de ladite désolvatation (par exemple obtenue par séchage naturel ou forcé de du premier film) entraîne, de préférence spontanément, la formation de ladite première couche 4A. Dans ce mode de réalisation avantageux, la première couche 4A est donc obtenue de préférence exclusivement par désolvatation du premier film une fois ce dernier déposé sur la face externe 2D du récipient 2 en verre, avantageusement sans qu'aucune réaction, en particulier aucune réaction de polymérisation ou de réticulation, n'intervienne après le dépôt dudit premier fil sur le récipient 2 en verre. Avantageusement, la première composition présente un extrait sec compris entre 20 et 70 % en poids, et de préférence compris entre 30 et 60 % en poids, de façon encore plus préférentielle entre 45 et 55 % en poids, de façon à permettre l'obtention, à partir du premier film et par simple évaporation de la phase aqueuse comme évoqué ci-avant, d'une première couche 4A homogène et cohésive. Dans un mode de réalisation particulièrement préféré, ladite première composition présente un extrait sec sensiblement égal à 48 % en poids.

Avantageusement, la seule évaporation de la phase aqueuse au sein de laquelle est dispersé le matériau polymérisé suffit donc pour former un film cohésif qui adhère directement sur le récipient 2 en verre et forme ainsi la première couche 4A. La première composition ne contient donc pas dans ce cas de produit réactif, du type uréthane, isocyanate, ou polyol, mais inclut directement le polymère à base de polyuréthane déjà complètement polymérisé et dispersé en phase aqueuse. Il est cependant tout à fait envisageable, sans pour autant que l'on sorte du cadre de l'invention, que le matériau dispersé en phase aqueuse ne soit pas déjà polymérisé et soit de ce fait destiné à subir par la suite, dans le cadre d'étapes ultérieures du procédé, une polymérisation ou une réticulation. De préférence, ladite dispersion formant la première composition est une émulsion aqueuse dudit matériau polymérisé, c'est-à-dire que des particules dudit polymère à base de polyuréthane sont dispersées dans de l'eau, ce qui permet notamment de faciliter le processus d'application par pulvérisation électrostatique. L'invention n'est cependant pas limitée à la mise en œuvre d'une émulsion aqueuse, et il est par exemple tout à fait envisageable que le matériau polymérisé se présente sous la forme d'une suspension de particules solides de polymère dans de l'eau, voire même d'une solution dudit polymère dans de l'eau. De façon particulièrement préférentielle, ladite première composition présente une viscosité à 20°C qui est comprise entre sensiblement 1 300 et 1 400 mPa.s, ce qui permet d'optimiser la pulvérisation électrostatique.

De préférence, ladite première opération de pulvérisation électrostatique de ladite première composition est effectuée alors que le récipient 2 en verre est porté à une température d'application supérieure à 30 °C. Cela signifie qu'au moment où la première composition est déposée par pulvérisation électrostatique sur la surface du récipient 2 en verre, la température de ladite surface excède 30°C, et de façon encore plus préférentielle est supérieure ou égale à 50 °C (par exemple de l'ordre de 50 à 55 °C). La mise en œuvre d'une telle température d'application, avantageusement supérieure à la température moyenne ambiante, combinée avec une technique de pulvérisation électrostatique, permet de déposer une épaisseur importante (en l'espèce d'au moins 50 µm, et par exemple comprise entre 100 et 200 µm), tout en conservant une excellente homogénéité et uniformité, en évitant en particulier les coulures.

Le procédé comprend en outre de préférence une étape de flammage dudit récipient 2 en verre pour le porter (tout du moins en ce qui concerne la surface à recouvrir) à ladite température d'application supérieure à 30 °C, de préférence d'au moins 50 °C. Le flammage permet d'obtenir facilement et rapidement le niveau de température d'application souhaité. Il est cependant tout à fait envisageable de recourir alternativement à d'autres méthodes de préchauffage de la surface en verre à recouvrir (par exemple préchauffage dans un four-tunnel, par infrarouges, etc.). Le recours à un flammage est toutefois préféré du fait de sa simplicité, de sa flexibilité et de sa rapidité. En outre, la mise en œuvre d'un flammage permet de parachever le nettoyage de la surface du récipient 2 à revêtir.

Avantageusement, ladite première opération de pulvérisation électrostatique est mise en œuvre au moyen d'au moins un premier dispositif de pulvérisation électrostatique à bol ou à disque. Un tel dispositif de pulvérisation électrostatique, connu en tant que tel, met en oeuvre un bol ou un disque tournant (par exemple à une vitesse de rotation comprise entre 15 000 et 40 000 tours / min, de préférence de l'ordre de 25 000 à 30 000 tours / min) permettant de fractionner, d'atomiser, la première composition, sans avoir à recourir à un flux d'air. Ceci n'exclut toutefois pas la mise en œuvre d'air sous pression, notamment pour assurer le réglage de la taille du cône de projection. De façon particulièrement avantageuse, ladite première opération de pulvérisation électrostatique est mise en oeuvre au moyen d'au moins un premier dispositif de pulvérisation électrostatique à bol refroidi, de façon à ce que ledit bol soit amené par exemple à une température sensiblement inférieure à 0 °C, de préférence comprise entre - 15 et - 5°C, par exemple de l'ordre de - 10 °C. Le bol rotatif dudit premier dispositif de pulvérisation électrostatique peut par exemple être refroidi par de l'air comprimé ou tout autre moyen. Par exemple, le premier dispositif de pulvérisation électrostatique peut mettre en œuvre une technologie conforme à celle commercialisée sous la marque déposée « *Ice Bell*® » par la société RANSBURG. Le refroidissement du bol, en particulier à une température de l'ordre de - 10 °C, permet de générer une sorte de « micro-climat » au niveau de la tête de pulvérisation du premier dispositif de pulvérisation électrostatique, ce qui évite une évaporation prématurée du solvant (qui est de préférence de l'eau) contenu dans la première composition à appliquer, empêchant ainsi l'encrassement du matériel de projection par un dépôt intempestif de matière sèche. Les opérations de nettoyage et rinçage du matériel d'application peuvent donc être espacées et les temps d'utilisation en continu du premier dispositif de pulvérisation électrostatique augmentés. Bien entendu, l'invention n'est pas limitée à la mise en œuvre d'un tel dispositif à bol refroidi, et un bol (ou disque) électrostatique classique pourrait également être utilisé, au prix toutefois d'une performance industrielle moindre, compte tenu notamment de la nature de la première composition (formée en l'espèce majoritairement, sinon quasi-totalement ou totalement, de polyuréthane) qui entraîne un risque d'encrassement prématuré de l'équipement.

Avantageusement, ladite première opération de pulvérisation électrostatique s'effectue au sein d'une enceinte dont la température et l'hygrométrie internes sont régulées. Par exemple, ladite première opération de pulvérisation électrostatique peut être réalisée sur une ligne de laquage traditionnelle, avec toutefois un contrôle de la température et de l'hygrométrie internes au sein de la cabine de laquage. Avantageusement, la première opération de pulvérisation électrostatique est mise en œuvre alors que le récipient 2 est placé dans une atmosphère présentant une hygrométrie élevée et stable, de préférence comprise entre 60 % et 90 %, et de façon encore plus préférentielle entre 60 % et 70 %, afin que l'effet de dépôt électrostatique soit suffisant et homogène sur l'ensemble du ou des récipient(s) 2 en verre à recouvrir. De préférence, l'hygrométrie n'excédera toutefois pas 80 % afin d'éviter l'apparition de phénomènes perturbateurs de conductions parasites. Afin d'augmenter encore l'efficacité du dépôt par pulvérisation électrostatique, ladite première opération de pulvérisation électrostatique est mise en œuvre alors que ledit récipient 2 en verre est placé au sein d'un brouillard, de préférence produit par un nébuliseur, par exemple un nébuliseur commercialisé sous la marque déposée « *Areco*® ». De préférence, le brouillard en question est un brouillard d'eau qui se présente sous la forme de fines gouttelettes. La technologie de nébulisation *Areco*® précitée permet par exemple de fragmenter de l'eau, via un système piézoélectrique, pour obtenir ainsi de fines gouttelettes d'eau dont 95 % d'entre elles présentent un diamètre inférieur à 5 µm.

Avantageusement, le procédé comprend, préalablement à l'étape de formation de ladite première couche 4A, une étape de traitement de surface visant à augmenter la tension de surface dudit récipient 2 en verre, afin de la rendre plus réactive et d'améliorer ainsi l'effet électrostatique. De préférence, ladite étape de traitement de surface comprend une silicatisation dudit récipient 2, permettant de modifier les propriétés de la surface à recouvrir de l'article en verre par un dépôt d'oxyde de silicium (SiOₓ), et réalisée par exemple par un procédé de dépôt chimique en phase vapeur par combustion (C-CVD), selon lequel des précurseurs liquides ou gazeux sont pyrolysés par une flamme et déposés à la surface du verre sous la forme d'une fine couche de quelques nanomètres d'épaisseur (procédé commercialisé sous la marque commerciale *Pyrosil*®). Une telle opération de silicatisation de la surface à recouvrir du récipient 2 en verre permet d'uniformiser ladite surface à revêtir, de la rendre plus réactive (tension de surface plus élevée) et donc d'améliorer l'effet électrostatique. Le recours à une silicatisation n'est toutefois pas obligatoire, et il est par exemple envisageable, à titre alternatif, que l'étape de traitement de surface (facultative) comprenne par exemple un traitement Corona ou un traitement plasma dudit article en verre, même si le recours à une silicatisation s'avère en pratique plus efficace pour améliorer l'effet de dépôt électrostatique. Avantageusement, ladite étape de formation de ladite première couche 4A s'effectue au moins en deux temps, avec la mise en oeuvre dans un premier temps d'une opération de dépôt, sur ledit récipient 2 en verre, d'un premier film inférieur de ladite première composition, suivie dans un deuxième temps de ladite première opération de pulvérisation électrostatique pour recouvrir ledit premier film inférieur d'un premier film supérieur de ladite première composition, lesdits premier film inférieur et premier film supérieur constituant ledit premier film destiné à former ladite première couche 4A. En d'autres termes, le recouvrement du récipient 2 en verre par le premier film s'effectue de préférence en deux films successifs, déposés l'un après l'autre et l'un sur l'autre. L'opération de dépôt du premier film inférieur peut être par exemple mise en œuvre au moyen d'un système d'application pneumatique classique, sous réserve toutefois de diluer suffisamment la première composition afin d'éviter un encrassement trop rapide du matériel de pulvérisation pneumatique. De façon préférentielle, ladite opération de dépôt est elle aussi mise en œuvre par pulvérisation électrostatique, et est donc dans ce cas préférentiel constitué par une opération préalable de pulvérisation électrostatique de ladite première composition sur ledit récipient 2, pour obtenir ledit premier film inférieur. De préférence, ladite opération préalable de pulvérisation électrostatique est mise en œuvre au moyen d'au moins un deuxième dispositif de pulvérisation électrostatique à bol ou à disque, de préférence à bol refroidi. Avantageusement, lesdits premier et deuxième dispositifs de pulvérisation électrostatique sont distincts mais sensiblement identiques, et consistent de préférence chacun en un dispositif de pulvérisation électrostatique à bol refroidi, par exemple à une température de l'ordre de - 10 °C. Le recours à un dépôt du premier film en deux temps permet d'obtenir plus facilement une première couche 4A d'épaisseur élevée parfaitement uniforme et homogène. Le premier film inférieur facilite en effet avantageusement le dépôt et l'accroche du premier film supérieur. De préférence, la première opération de pulvérisation électrostatique est mise en œuvre alors que ledit premier film inférieur est encore humide pour que l'effet électrostatique soit présent. Cela signifie donc que le temps de latence entre l'opération de dépôt du premier film inférieur et la première opération de pulvérisation du premier film supérieur est suffisamment réduit pour que le solvant (qui est avantageusement de l'eau) présent dans le premier film inférieur n'ait pas totalement disparu au moment où le premier film supérieur est appliqué par pulvérisation électrostatique. Ce mode de réalisation *« mouillé sur mouillé* » particulièrement avantageux, consistant à former le premier film en deux étapes successives, de préférence par deux opérations de pulvérisation électrostatique successives, avantageusement au moyen de dispositifs électrostatique à bol refroidi, permet d'obtenir une première couche 4A d'épaisseur importante et dont l'homogénéité et l'uniformité sont optimales.

De préférence, comme également évoqué précédemment en lien avec la description du biberon 1 de l'invention, ledit revêtement 4 de protection est un revêtement multicouche qui comprend ladite première couche 4A recouvrant extérieurement ledit récipient 2 en verre et au moins une deuxième couche 4B, superposée, qui recouvre ladite première couche 4A. Alors que ladite première couche 4A est formée dudit matériau souple adhérant audit récipient en verre, ladite deuxième couche 4B est quant à elle formée d'un matériau avantageusement plus dur et est notamment destinée, comme déjà évoqué précédemment, à venir protéger ladite première couche 4A. Ladite deuxième couche 4B est ainsi superposée sur et contre ladite première couche 4A de telle sorte que cette dernière est interposée entre la face externe 2D du récipient 2 en verre d'une part et la deuxième couche 4B d'autre part. Selon le mode de réalisation préférentiel permettant d'aboutir au biberon 1 illustré à la figure 1, ledit revêtement 4 est un revêtement bicouche, la première couche 4A adhérant directement audit récipient 2 en verre tandis que la deuxième couche 4B forme la couche superficielle dudit revêtement 4. Il est cependant parfaitement envisageable que le revêtement 4 comprenne plus de deux couches, et par exemple trois ou quatre couches, ou plus.

Ladite première couche 4A étant formée, comme envisagé plus haut, d'un matériau souple à base de polyuréthane, cette deuxième couche 4B est formée de préférence d'un matériau à base de polyuréthane fonctionnalisé par un composé à base d'un fluoropolymère, ledit fluoropolymère étant de préférence le polytétrafluoroéthylène (PTFE). Avantageusement, l'étape de recouvrement susvisée comprend alors également une étape de formation de ladite deuxième couche 4B au cours de laquelle :
- une deuxième composition, de préférence en phase aqueuse, incluant au moins un isocyanate (qui est de préférence un isocyanate bloqué, pour les raisons exposées dans ce qui précède) et une substance à base d'un fluoropolymère (qui est de préférence le polytétrafluoroétylène (PTFE), pour les raisons exposées également dans ce qui précède), est appliquée sous la forme d'un deuxième film sur ladite première couche 4A (ou sur ledit premier film).
   Ce deuxième film destiné à former la deuxième couche 4B superficielle peut être appliqué quasiment immédiatement après application dudit premier film, lorsque celui-ci est encore humide (c'est-à-dire encore imprégné de solvant, par exemple après un temps de désolvatation de 30 s à 2 min), ou bien après un temps d'attente (par exemple plusieurs dizaines de minutes) pour une application de la deuxième composition sur ladite première couche 4A obtenue après désolvatation complète dudit premier film. La deuxième composition est avantageusement appliquée par des moyens analogues à ceux mis en œuvre pour appliquer la première composition, et par exemple par pulvérisation, et en particulier par pulvérisation électrostatique au bol ou au disque (pour autant que la deuxième couche soit appliquée sur ledit premier film encore humide (application « *mouillée sur mouillée* »), c'est-à-dire contenant encore suffisamment de solvant pour permettre au procédé électrostatique de fonctionner convenablement), une application au pistolet pneumatique pouvant toutefois être préférée ;
- ladite deuxième composition ainsi appliquée, de préférence sous la forme d'un deuxième film mince uniforme et homogène, sur la première couche 4A (sèche, ou sur ledit premier film humide), est ensuite soumise à un traitement qui entraîne la réaction d'au moins ledit isocyanate avec la substance à base de fluoropolymère pour former ledit matériau à base de polyuréthane fonctionnalisé par un composé à base d'un fluoropolymère (avantageusement le PTFE).

En d'autres termes, une fois la deuxième composition appliquée sur la première couche 4A (ou sur le premier film), il se produit au sein de ladite deuxième composition une réaction de polymérisation entraînant la transformation du mélange isocyanate / fluoropolymère en un polyuréthane fonctionnalisé par un composé à base dudit fluoropolymère. Cette réaction peut se produire par exemple spontanément, sous l'effet de l'exposition à l'air libre, en film mince, de la deuxième composition, auquel cas le traitement en question consiste uniquement à laisser à l'air libre la deuxième composition appliquée sur la première couche 4A (ou sur le premier film) pour qu'elle réagisse spontanément. Alternativement, selon un mode de réalisation préférentiel de l'invention, le traitement entrainant la réaction susvisée est plutôt un traitement thermique permettant d'atteindre une température seuil à partir de laquelle l'isocyanate polymérisera et réagira avec le fluoropolymère. Par exemple, le traitement inclut une étape de cuisson du récipient 2 en verre sur lequel est appliqué ladite deuxième composition, à une température suffisante pour déclencher la réaction susvisée, ladite température étant par exemple comprise entre sensiblement 90 °C et 200 °C, de préférence entre 120 °C et 180 °C, de façon encore plus préférentielle entre 142 °C et 170 °C. Cette étape de cuisson peut être réalisée en four traditionnel à air chaud, dans un four à convection forcée d'air (par exemple pendant 15 min à 150 °C), ou encore au moyen d'un four à infrarouges, ou encore au moyen d'un four combinant convection forcée d'air et rayonnements infrarouges. Cette étape de cuisson permet ainsi d'obtenir une deuxième couche 2B superficielle lisse, avec une excellente résistance au souillage, au blocage, ainsi qu'un caractère hydrophobe, permettant de laver et de stériliser le biberon 1, y compris par immersion dans de l'eau bouillante, sans risque de dégradation du revêtement 4.

Préalablement à l'étape de cuisson entrainant la réaction précitée au sein de ladite deuxième composition, une étape de désolvatation peut être avantageusement mise en oeuvre, notamment si la deuxième composition a été appliquée sur la première composition encore humide (c'est-à-dire directement sur le premier film), cette étape de désolvatation visant à évacuer le solvant à la fois hors dudit deuxième film et surtout hors dudit premier film. On obtient alors ainsi avantageusement ladite première couche 4A et un deuxième film sensiblement sec. Ceci permet d'éviter tout blanchiment et toute formation de cloques ou bulles en surface du revêtement 4, qui pourraient se produire si une fraction significative du solvant (avantageusement formé d'eau) contenu dans le premier film n'était pas évacuée avant la mise en oeuvre de l'étape de cuisson. Cette étape de désolvatation peut simplement consister à laisser reposer le premier film à température ambiante afin que le solvant s'évapore naturellement à l'air libre. Dans ce cas, l'étape de désolvatation peut par exemple consister à laisser le solvant s'évaporer naturellement pendant une durée de l'ordre de 25 à 40 min à température ambiante, cette durée pouvant varier en fonction de l'épaisseur du premier film. La durée de désolvatation peut cependant être réduite par exemple à 10 - 20 min si un chauffage à 40 - 60 °C du premier film et / ou un brassage d'air de l'environnement du premier film est mis en œuvre, afin d'accélérer la désolvatation. Il est cependant parfaitement envisageable de procéder à la désolvatation (pendant 15 à 30 min par exemple en fonction des conditions de température et de brassage de l'air) dudit premier film avant application dudit deuxième film. Une fois ledit deuxième film déposé, on procède alors à une désolvatation (pendant 5 à 10 min par exemple en fonction des conditions de température et de brassage de l'air) de celui-ci puis à une cuisson pour initier la réaction de polymérisation évoquée précédemment et former ainsi ladite deuxième couche 4B.

Avantageusement, la deuxième composition présente une viscosité à 20 °C qui est comprise entre sensiblement 5 et 30 mPa.s, de préférence entre sensiblement 10 et 20 mPa.s, afin de faciliter l'application, en particulier par projection et recouvrir aisément, de manière homogène et uniforme, la première couche 4A (ou le premier film). A cette fin, la viscosité à 20 °C de la deuxième composition est encore plus préférentiellement comprise entre sensiblement 14 et 15 mPa.s. Avantageusement, la deuxième composition présente un extrait sec compris entre 10 et 60 % en poids, de préférence entre 20 et 50 % en poids, de façon encore plus préférentielle entre 25 et 40 % en poids. Un extrait sec égal par exemple 32 % en poids conduit à d'excellents résultats, tant sur le plan du caractère industrialisable que des propriétés du revêtement 4 obtenu.

Avantageusement, la deuxième composition est appliquée sur la première couche 4A (ou sur le premier film) de façon que l'épaisseur E2 de la deuxième couche 4B qu'elle permet d'obtenir, à l'issue du procédé selon l'invention, soit inférieure à l'épaisseur E1 de la première couche 4A. Cette épaisseur E2 peut, à ce titre, être sensiblement comprise entre 2 et 40 µm, et de façon encore plus préférentielle sensiblement comprise entre 5 et 20 µm, de façon à protéger efficacement la première couche 4A sans pour autant constituer une surépaisseur inutile, coûteuse ou gênante. La deuxième couche 4B forme donc une couche superficielle protectrice (vernis protecteur) qui isole avantageusement la première couche 4A souple de l'environnement extérieur.

En définitive, le recours à un revêtement 4 de protection contre les chocs thermiques, et en particulier à un revêtement 4 bicouche avec une sous-couche (première couche 4A) à fonction essentiellement mécanique (absorption des chocs thermiques et également, avantageusement, absorption les chocs de contact et rétention des éventuels bris de verre) recouverte d'un vernis de protection (deuxième couche 4B, superficielle) présentant une très bonne résistance au souillage et au blocage ainsi qu'un caractère lisse et hydrophobe, formé directement sur la face externe 2D du récipient 2 en verre et adhérant directement à cette dernière, permet d'obtenir de façon simple rapide, efficace et bon marché un biberon 1 parfaitement adapté à un usage courant sécurisé.

### POSSIBILITE D'APPLICATION INDUSTRIELLE

L'invention trouve son application industrielle dans la conception, la fabrication de biberons en verre (et récipients assimilés) conçus pour contenir une substance fluide destinée à l'alimentation et à l'hydratation humaine ou animale, en particulier à l'alimentation et à l'hydratation infantile.

## Revendications

1. Biberon (1) comprenant un récipient (2) en verre, **caractérisé en ce qu'**il comprend également un revêtement (4) de protection contre les chocs thermiques qui recouvre extérieurement au moins une fraction dudit récipient (2) en verre, ledit récipient (2) en verre étant en verre sodocalcique et ledit revêtement (4) de protection comprenant au moins une première couche (4A) d'un matériau souple adhérant audit récipient (2) en verre, ledit matériau souple étant un matériau à base de polyuréthane.

2. Biberon (1) selon la revendication précédente, **caractérisé en ce que** ledit revêtement (4) de protection est un revêtement multicouche qui comprend ladite première couche (4A) recouvrant ledit récipient (2) en verre et une deuxième couche (4B) recouvrant ladite première couche (4A), ladite première couche (4A) étant formée dudit matériau souple adhérant audit récipient (2) en verre tandis que ladite deuxième couche (4B) est formée d'un matériau à base de polyuréthane fonctionnalisé par un composé à base d'un fluoropolymère, ledit matériau formant la deuxième couche (4B) comprenant le produit réactionnel d'un isocyanate avec au moins un alcool et une substance à base d'un fluoropolymère.

3. Biberon (1) selon la revendication précédente, **caractérisé en ce que** ledit fluoropolymère est le polytétrafluoroéthylène (PTFE).

4. Biberon (1) selon la revendication 2 ou 3, **caractérisé en ce que** ledit revêtement (4) est un revêtement bicouche, la première couche (4A) adhérant directement audit récipient (2) en verre tandis que la deuxième couche (4B) forme la couche superficielle dudit revêtement (4).

5. Biberon (1) selon l'une quelconque des revendications 2 à 4, **caractérisé en ce que** ledit isocyanate est un isocyanate bloqué.

6. Biberon (1) selon l'une quelconque des revendications 2 à 5, **caractérisé en ce que** ledit matériau formant la deuxième couche (4B) est obtenu par polymérisation d'une deuxième composition incluant au moins ledit isocyanate et ladite substance à base d'un fluoropolymère.

7. Procédé de fabrication d'un biberon (1), dans lequel on fabrique ou on fournit un récipient (2) en verre, **caractérisé en ce qu'**il comprend une étape de recouvrement extérieur d'au moins une fraction dudit récipient (2) en verre par un revêtement (4) de protection contre les chocs thermiques, ledit récipient (2) en verre étant en verre sodocalcique et ledit revêtement (4) de protection comprenant au moins une première couche (4A) d'un matériau souple adhérant audit récipient (2) en verre, ledit matériau souple étant un matériau à base de polyuréthane.

8. Procédé selon la revendication précédente, **caractérisé en ce que** ladite étape de recouvrement comprend une étape de formation de ladite première couche (4A) incluant au moins une première opération de pulvérisation électrostatique, sur ledit récipient (2) en verre porté à une température d'application supérieure à 30°C, d'une première composition formée par une dispersion d'une substance à base de polyuréthane dans un solvant, pour obtenir un premier film qui est destiné à former ladite première couche (4A).

9. Procédé selon la revendication 8, **caractérisé en ce que** ledit solvant est de l'eau, de sorte que ladite première composition est formée par une dispersion en phase aqueuse de ladite substance à base de polyuréthane.

10. Procédé selon la revendication précédente **caractérisé en ce que** ladite substance consiste en un matériau polymérisé non réactif dont la masse molaire est suffisamment élevée pour que la simple évaporation de la phase aqueuse entraîne la formation de ladite première couche (4A).

11. Procédé selon l'une quelconque des revendications 8 à 10 **caractérisé en ce que** ladite étape de formation de ladite première couche (4A) s'effectue au moins en deux temps, avec la mise en œuvre dans un premier temps d'une opération de dépôt sur ledit récipient (2) en verre d'un premier film inférieur de ladite première composition, suivie dans un deuxième temps de ladite première opération de pulvérisation électrostatique pour recouvrir ledit premier film inférieur d'un premier film supérieur de ladite première composition, lesdits premier film inférieur et premier film supérieur constituant ledit premier film destiné à former ladite première couche (4A).

12. Procédé selon l'une quelconque des revendications 7 à 11, **caractérisé en ce que** ledit revêtement (4) de protection est un revêtement multicouche qui comprend ladite première couche (4A) recouvrant ledit récipient (2) en verre et une deuxième couche (4B) recouvrant ladite première couche (4A), ladite première couche (4A) étant formée dudit matériau souple adhérant audit récipient (2) en verre tandis que ladite deuxième couche (4B) est formée d'un matériau à base de polyuréthane fonctionnalisé par un composé à base d'un fluoropolymère, ladite étape de recouvrement comprenant une étape de formation de ladite deuxième couche (4B) au cours de laquelle :
- une deuxième composition incluant au moins un isocyanate et une substance à base d'un fluoropolymère est appliquée sur ladite première couche (4A) ;
- ladite deuxième composition ainsi appliquée sur ladite première couche (4A) est soumise à un traitement qui entraîne la réaction d'au moins ledit isocyanate avec la substance à base de fluoropolymère pour former ledit matériau à base de polyuréthane fonctionnalisé par un composé à base d'un fluoropolymère.

13. Procédé selon la revendication précédente, **caractérisé en ce que** ledit isocyanate est un isocyanate bloqué et ledit fluoropolymère est de préférence le polytétrafluoroéthylène (PTFE).

14. Procédé selon la revendication 12 ou 13, **caractérisé en ce que** ledit traitement inclut une étape de cuisson dudit récipient (2) en verre sur lequel est appliqué ladite deuxième composition à une température suffisante pour déclencher ladite réaction, ladite température étant par exemple comprise entre sensiblement 90 °C et 200 °C, de préférence entre 120 °C et 180 °C, de façon encore plus préférentielle entre 140 °C et 170 °C.

## Patentansprüche

1. Babyflasche (1), umfassend einen Glasbehälter (2), **dadurch gekennzeichnet, dass** sie auch einen Überzug (4) zum Schutz gegen Hitzeschock umfasst, der außen zumindest einen Teil des Glasbehälters (2) bedeckt, wobei der Glasbehälter (2) aus Kalk-Natron-Glas ist, und der Schutzüberzug (4) mindestens eine erste Schicht (4A) aus einem am Glasbehälter (2) anhaftenden weichen Material umfasst, wobei das weiche Material ein Material auf Basis von Polyurethan ist.

2. Babyflasche (1) nach dem vorhergehenden Anspruch, **dadurch gekennzeichnet, dass** der Schutzüberzug (4) ein mehrschichtiger Überzug ist, der die erst Schicht (4A), die den Glasbehälter (2) bedeckt, und eine zweite Schicht (4B), die die erste Schicht (4A) bedeckt, umfasst, wobei die erste Schicht (4A) aus dem am Glasbehälter (2) anhaftenden weichen Material gebildet ist, während die zweite Schicht (4B) aus einem Material auf Basis von Polyurethan ist, das durch eine Verbindung auf Basis eines Fluorpolymers funktionalisiert ist, wobei das die zweite Schicht (4B) bildende Material das Reaktionsprodukt aus einem Isocyanat mit mindestens einem Alkohol und einer Substanz auf Basis eines Fluorpolymers umfasst.

3. Babyflasche (1) nach dem vorhergehenden Anspruch, **dadurch gekennzeichnet, dass** das Fluorpolymer das Polytetrafluorethylen (PTFE) ist.

4. Babyflasche (1) nach Anspruch 2 oder 3, **dadurch gekennzeichnet, dass** der Überzug (4) ein Zweischichtüberzug ist, wobei die erste Schicht (4A) direkt am Glasbehälter (2) anhaftet, während die zweite Schicht (4B) die oberflächliche Schicht des Überzugs (4) bildet.

5. Babyflasche (1) nach einem Ansprüche 2 bis 4, **dadurch gekennzeichnet, dass** das Isocyanat ein blockiertes Isocyanat ist.

6. Babyflasche (1) nach einem der Ansprüche 2 bis 5, **dadurch gekennzeichnet, dass** das die zweite Schicht (4B) bildende Material durch Polymerisation einer zweiten Zusammensetzung erhalten wird, die mindestens das Isocyanat und die Substanz auf Basis eines Fluorpolymers einschließt.

7. Verfahren zur Herstellung einer Babyflasche (1), bei dem ein Glasbehälter (2) hergestellt oder bereitgestellt wird, **dadurch gekennzeichnet, dass** es einen Schritt des äußeren Bedeckens mindestens eines Teils des Glasbehälters (2) mit einem Schutzüberzug (4) gegen Hitzeschock umfasst, wobei der Glasbehälter (2) aus Kalk-Natron-Glas ist, und der Schutzüberzug (4) mindestens eine erste Schicht (4A) aus einem am Glasbehälter (2) anhaftenden weichen Material umfasst, wobei das weiche Material ein Material auf Basis von Polyurethan ist.

8. Verfahren nach dem vorhergehenden Anspruch, **dadurch gekennzeichnet, dass** der Schritt des Bedeckens einen Schritt der Bildung der ersten Schicht (4A) umfasst, der mindestens einen ersten Vorgang des elektrostatischen Sprühens einer ersten Zusammensetzung, die von einer Dispersion einer Substanz auf Basis von Polyurethan in einem Lösungsmittel gebildet ist, auf den Glasbehälter (2), der auf eine Anwendungstemperatur über 30 °C gebracht wurde, einschließt, um einen ersten Film zu erhalten, der dazu bestimmt ist, die erste Schicht (4A) zu bilden.

9. Verfahren nach Anspruch 8, **dadurch gekennzeichnet, dass** das Lösungsmittel Wasser ist, so dass die erste Zusammensetzung von einer Dispersion in wässriger Lösung der Substanz auf Basis von Polyurethan gebildet ist.

10. Verfahren nach dem vorhergehenden Anspruch, **dadurch gekennzeichnet, dass** die Substanz aus einem nicht reaktiven polymerisierten Material besteht, dessen Molmasse ausreichend hoch ist, so dass die einfache Verdampfung der wässrigen Phase zur Bildung der ersten Schicht (4A) führt.

11. Verfahren nach einem der Ansprüche 8 bis 10, **dadurch gekennzeichnet, dass** der Schritt der Bildung der ersten Schicht (4A) mindestens in zwei Phasen erfolgt, mit dem Einsatz einer ersten Phase eines Vorgangs des Aufbringens eines ersten unteren Films der ersten Zusammensetzung auf den Glasbehälter (2), in einer zweiten Phase gefolgt von dem ersten Vorgang des elektrostatischen Sprühens, um den ersten unteren Film mit einem oberen Film der ersten Zusammensetzung zu bedecken, wobei der erste untere Film und der erste obere Film den ersten Film darstellen, der dazu bestimmt ist, die erste Schicht (4A) zu bilden.

12. Verfahren nach einem der Ansprüche 7 bis 11, **dadurch gekennzeichnet, dass** der Schutzüberzug (4) ein mehrschichtiger Überzug ist, der die erste Schicht (4A), die den Glasbehälter (2) bedeckt, und eine zweite Schicht (4B), die die erste Schicht (4A) bedeckt, umfasst, wobei die erste Schicht (4A) von dem am Glasbehälter (2) anhaftenden weichen Material gebildet ist, während die zweite Schicht (4B) von einem Material auf Basis von Polyurethan, das durch eine Verbindung auf Basis von Fluorpolymer funktionalisiert ist, gebildet ist, wobei der Schritt des Bedeckens eine Schritt der Bildung der zweiten Schicht (4B) umfasst, während dessen:
- eine zweite Zusammensetzung, die mindestens ein Isocyanat und eine Substanz auf Basis eines Fluorpolymers einschließt, die auf die erste Schicht (4A) aufgetragen wird;
- die zweite so auf die erste Schicht (4A) aufgebrachte Zusammensetzung einer Behandlung unterzogen wird, die zur Reaktion mindestens des Isocyanats mit der Substanz auf Basis von Fluorpolymer führt, um das Material auf Basis von funktionalisiertem Polyurethan durch eine Verbindung auf Basis eines Fluorpolymers zu bilden.

13. Verfahren nach dem vorhergehenden Anspruch, **dadurch gekennzeichnet, dass** das Isocyanat ein blockiertes Isocyanat ist, und das Fluorpolymer vorzugsweise das Polytetrafluorethylen (PTFE) ist.

14. Verfahren nach Anspruch 12 oder 13, **dadurch gekennzeichnet, dass** die Behandlung einen Schritt des Brennens des Glasbehälters (2) umfasst, auf den die zweite Zusammensetzung mit einer ausreichenden Temperatur aufgebracht wird, um die Reaktion auszulösen, wobei die Temperatur beispielsweise zwischen im Wesentlichen 90 °C und 200 °C, vorzugsweise zwischen 120 °C und 180 °C, noch bevorzugter zwischen 140 °C und 170 °C beträgt.

## Claims

1. A baby bottle (1) comprising a glass container (2), **characterized in that** it also comprises a protective coating (4) for protection against thermal shocks that covers the outside of at least a fraction of said glass container (2), said glass container (2) being made of soda-lime glass and said protective coating (4) comprising at least a first layer (4A) of a flexible material adhering to said glass container (2), said flexible material being a polyurethane-based material.

2. A baby bottle (1) according to of the preceding claim, **characterized in that** said protective coating (4) is a multi-layer coating comprising said first layer (4A) covering said glass container (2) and a second layer (4B) covering said first layer (4A), said first layer (4A) being formed by said flexible material adhering to said glass container (2), while said second layer (4B) is formed by a polyurethan-based material functionalized by a compound based on a fluoropolymer, said material forming the second layer (4B) comprising the reaction product of an isocyanate reacting with at least an alcohol and a substance based on a fluoropolymer.

3. A baby bottle (1) according to of the preceding claim, **characterized in that** said fluoropolymer preferably is polytetrafluoroethylene (PTFE)

4. A baby bottle (1) according to claim 2 or claim 3, **characterized in that** said coating (4) is a two-layer coating, the first layer (4A) adhering directly to said glass container (2), while the second layer (4B) forms the surface layer of said coating (4).

5. A baby bottle (1) according to any one of claims 2 to 4, **characterized in that** said isocyanate is a blocked isocyanate.

6. A baby bottle (1) according to any one of claims 2 to 5, **characterized in that** said material forming the second layer (4B) is obtained by polymerizing a second composition including at least said isocyanate and said substance based on a fluoropolymer.

7. A method of fabricating a baby bottle (1), wherein a glass container (2) is fabricated or provided, the method being **characterized in that** it comprises a covering step for covering the outside of at least a fraction of said glass container (2) with a protective covering (4) for protection against thermal shocks, said glass container (2) being made of soda-lime glass and said protective coating (4) comprising at least a first layer (4A) of a flexible material adhering to said glass container (2), said flexible material being a polyurethane-based material.

8. A method according to the preceding claim, **characterized in that** said covering step comprises a step of forming said first layer (4A) that includes at least a first operation of electrostatically spraying a first composition on said glass container (2) in order to obtain a first film that is to form said first layer (4A), the glass container (2) being raised to an application temperature higher than 30°C, and the first composition being formed by a dispersion of a polyurethane-based substance in a solvent.

9. A method according to claim 8, **characterized in that** said solvent is water, such that said first composition is formed by said polyurethane-based substance dispersed in an aqueous phase.

10. A method according to the preceding claim, **characterized in that** said substance consists in a non-reactive polymerized material of molar weight that is sufficiently high for mere evaporation of the aqueous phase to lead to the formation of said first layer (4A).

11. A method according to any one of claims 8 to 10, **characterized in that** said step of forming said first layer (4A) takes place in at least two stages, with with the implementation in a first stage of an operation of depositing a bottom first film of said first composition on said glass container (2), followed in a second stage by said first electrostatic spraying operation in order to cover said bottom first film with a top first film of said first composition, said bottom first film and top first film together constituting said first film of that is to form said first layer (4A).

12. A method according to any one of claims 7 to 11, **characterized in that** said protective coating (4) is a multi-layer coating comprising said first layer (4A) covering said glass container (2) and a second layer (4B) covering said first layer (4A), said first layer (4A) being formed by said flexible material adhering to said glass container (2), while said second layer (4B) is formed by a polyurethane-based material on functionalized by a compound based on a fluoropolymer, said covering step comprises a step of forming said second layer (4B), during which:
- a second composition including at least an isocyanate and a substance based on a fluoropolymer is applied on said first layer (4A);
- said second composition as applied in this way to said first layer (4A) is subjected to treatment that causes at least said isocyanate to react with the substance based on a fluoropolymer so as to form said polyurethane-based material that is functionalized by a compound based on a fluoropolymer.

13. A method according to the preceding claim, **characterized in that** said isocyanate is a blocked isocyanate and said fluoropolymer preferably is polytetrafluoroethylene (PTFE).

14. A method according to the claim 12 or 13, **characterized in that** said treatment includes a step of subjecting said glass container (2) on which said second intermediate composition has been applied to baking at a temperature that is high enough to trigger said reaction, said temperature lying substantially in the range 90°C to 200°C, for example, preferably in the range 120°C to 180°C, and in even more preferred manner in the range 140°C to 170°C.
